(19) Europäisches Patentamt
European Patent Office
Office européen des brevets

(11) **EP 1 621 749 B1**

(12) **FASCICULE DE BREVET EUROPEEN**

(45) Date de publication et mention
de la délivrance du brevet:
**13.06.2007 Bulletin 2007/24**

(51) Int Cl.:
*F02D 41/14* *(2006.01)*  *F01N 3/08* *(2006.01)*
*F02D 41/02* *(2006.01)*

(21) Numéro de dépôt: **05291394.4**

(22) Date de dépôt: **28.06.2005**

(54) **Dispositif de détermination de la masse de NOx stockée dans un piège à NOx et système de supervision de la régénération d'un piège à NOx comprenant un tel dispositif**

Vorrichtung zur Bestimmung einer in einem NOx-Speicher gespeicherte NOx-Masse und ein Überwachungssystem für die Regeneration des NOx-Speichers beinhaltend eine solche Vorrichtung

Device for determining the mass of particles in a NOx trap and a system for supervising the regeneration of the NOx trap comprising such a device

(84) Etats contractants désignés:
**AT BE BG CH CY CZ DE DK EE ES FI FR GB GR HU IE IS IT LI LT LU MC NL PL PT RO SE SI SK TR**

(30) Priorité: **20.07.2004 FR 0408049**

(43) Date de publication de la demande:
**01.02.2006 Bulletin 2006/05**

(73) Titulaire: **Peugeot Citroen Automobiles SA**
**78140 Vélizy Villacoublay (FR)**

(72) Inventeur: **Audouin, Arnaud**
**75018 Paris (FR)**

(74) Mandataire: **Habasque, Etienne J. Jean-François et al**
**Cabinet Lavoix**
**2, Place d'Estienne d'Orves**
**75441 Paris Cédex 09 (FR)**

(56) Documents cités:
**EP-A- 1 416 130**     **DE-C1- 19 607 151**
**FR-A1- 2 768 181**     **US-A1- 2003 163 987**

**Description**

La présente invention concerne un dispositif de détermination de la masse de NOx stockée dans un piège à NOx agencé dans une ligne d'échappement d'un moteur de véhicule automobile et un système de supervision de la régénération d'un piège à NOx comprenant un tel dispositif.

Plus particulièrement, la présente invention concerne un dispositif du type susmentionné comprenant des moyens d'acquisition de la richesse des gaz d'échappement et de la température du piège à NOx, des moyens de comparaison de la richesse des gaz d'échappement en amont du piège à NOx à une valeur prédéterminée pour déterminer si les gaz d'échappement en amont du piège à NOx sont riches ou pauvres et des moyens de détermination de la masse de NOx stockée dans le piège NOx en fonction de la température du piège à NOx et de la richesse des gaz d'échappement,

On connaît un tel dispositif du document DE-C1-196 07 151.

Les moteurs de véhicules automobiles, et plus particulièrement les moteurs de type Diesel, sont émetteurs de particules polluantes telles que des oxydes d'azote, ou NOx. Afin de minimiser l'émission de tels polluants, un piège à NOx est généralement agencé dans la ligne d'échappement du moteur afin de piéger et réduire les NOx émis par celui-ci.

De manière typique, le piège à NOx présente deux états de fonctionnement, à savoir un état de stockage des NOx et un état de réduction des NOx, qui sont commandés notamment en fonction de la richesse des gaz d'échappement entrant dans le piège et de la température du piège.

La capacité de stockage du piège n'étant pas illimitée, il est nécessaire de régulièrement et/ou périodiquement régénérer le piège, c'est-à-dire réduire les NOx stockée dans celui-ci.

A cet effet, le moteur est généralement associé à un superviseur du fonctionnement du piège à NOx, qui commande le fonctionnement du moteur en fonction de diverses informations, comme la température du piège, le point de fonctionnement du moteur ou la masse de NOx stockée dans le piège à NOx par exemple.

En fonction de ces informations, le superviseur règle généralement l'injection de carburant dans les cylindres du moteur afin de faire varier la richesse des gaz d'échappement et la température de ceux-ci.

Certaines des informations utilisées par le superviseur peuvent être acquises de manière simple, par exemple au moyen de capteurs. Toutefois, d'autres informations, et plus particulièrement la masse de NOx stockée dans le piège à NOx, sont difficilement mesurables et nécessitent l'utilisation d'une estimation basée sur un modèle de fonctionnement du piège à NOx.

Une telle estimation nécessite classiquement une somme importante de calculs, de sorte qu'il est difficile de l'implémenter sur un véhicule automobile à moins d'utiliser un micro-contrôleur aux capacités de calcul importantes.

Par ailleurs, l'utilisation d'un modèle du fonctionnement du piège à NOx peut avoir pour conséquence une estimation imprécise lorsque les conditions de fonctionnement du piège à NOx ne sont pas compatibles avec les caractéristiques du modèle utilisé. En effet, le modèle est classiquement déterminé pour une plage de fonctionnement prédéfinie du piège à NOx, de sorte que tout fonctionnement du piège à NOx non compris dans une telle plage peut induire une estimation non précise de la masse stockée dans le piège.

Le but de la présente invention est de résoudre les problèmes susmentionnés en proposant un dispositif de détermination de la masse de NOx stockée dans un piège à NOx qui soit fiable et rapide, tant lors de la phase de stockage de NOx dans le piège, que lors de la phase de régénération de celui-ci.

A cet effet, l'invention a pour objet un dispositif de détermination de la masse de NOx stockée dans un piège à NOx agencé dans une ligne d'échappement d'un moteur de véhicule automobile, le dispositif comprenant des moyens d'acquisition de la richesse des gaz d'échappement et de la température du piège à NOx, des moyens de comparaison de la richesse des gaz d'échappement en amont du piège à NOx à une valeur prédéterminée pour déterminer si les gaz d'échappement en amont du piège à NOx sont riches ou pauvres et des moyens de détermination de la masse NOx de stockée dans le piège à NOx en fonction de la température du piège NOx et de la richesse des gaz d'échappement caractérisé en ce qu'il comprend des moyens d'acquisition du débit à NOx en amont du piège à NOx, et en ce que les moyens de détermination de la masse de NOx stockée dans le piège à NOx comprennent :

- des premiers moyens de détermination adaptés pour déterminer, lorsque les gaz d'échappement sont pauvres, l'accroissement par unité de temps de la masse de NOx stockée dans le piège à NOx en fonction de la masse de NOx déjà stockée dans le piège à NOx, de la température du piège à NOx, et du débit de NOx en amont du piège à NOx ; et
- des seconds moyens de détermination adaptés pour déterminer, lorsque les gaz d'échappement sont riches, la réduction par unité de temps de la masse de NOx stockée dans le piège à NOx en fonction de la température du piège à NOx et de la richesse des gaz d'échappement en amont du piège à NOx.

Suivant des modes particuliers de réalisation, le dispositif comporte une ou plusieurs des caractéristiques suivantes :

- les premiers moyens de détermination de l'accroissement par unité de temps de la masse de NOx stockée comprennent :

  - des moyens formant cartographie adaptés pour déterminer l'efficacité de stockage des NOx du piège à NOx en évaluant, pour la masse de NOx déjà stockée et la température du piège à NOx, une cartographie prédéterminée d'efficacités de stockage ; et
  - des moyens de multiplication du débit de NOx acquis par l'efficacité de stockage du piège à NOx déterminée, pour déterminer l'accroissement par unité de temps de la masse de NOx stockée dans le piège à NOx;

- il comprend des moyens d'acquisition du débit d'air en entrée du moteur et des moyens de calcul du rapport entre le débit d'air en entrée du moteur et le volume de stockage du piège à NOx, et en ce que les premiers moyens de détermination de l'accroissement par unité de temps de la masse de NOx stockée comprennent en outre des moyens de correction de l'accroissement par unité de temps déterminé en fonction de ce rapport ;
- il comprend des moyens d'acquisition de la concentration de NOx dans les gaz d'échappement en amont du piège à NOx, et en ce que les premiers moyens de détermination de l'accroissement par unité de temps de la masse de NOx stockée comprennent en outre des moyens de correction de l'accroissement par unité de temps déterminé en fonction de cette concentration ;
- il comprend des moyens d'acquisition de l'état d'usure du piège à NOx, et en ce que les premiers moyens de détermination de l'accroissement par unité de temps de la masse de NOx stockée comprennent en outre moyens de correction de l'accroissement par unité de temps déterminé en fonction de cet état d'usure ;
- les seconds moyens de détermination de la réduction par unité de temps de la masse de NOx stockée comprennent des moyens formant cartographie adaptés pour déterminer la réduction par unité de temps de la masse de NOx en évaluant, pour la richesse acquise des gaz d'échappement en amont du piège à NOx et la température acquise du piège à NOx, une cartographie prédéterminée de réduction par unité de temps ; et
- il comprend en outre des moyens d'acquisition du débit d'air en entrée du moteur et des moyens de calcul du rapport entre le débit d'air en entrée du moteur et le volume de stockage du piège à NOx, et en ce que les seconds moyens de la réduction par unité de temps de la masse de NOx stockée comprennent en outre des moyens de correction de la réduction par unité de temps déterminée en fonction de ce rapport.

Un autre objet de l'invention est un système de supervision comprenant le dispositif de détermination de la masse de NOx stockée dans le piège à NOx susmentionné.

Ce système est caractérisé en ce qu'il comporte des moyens d'activation de la régénération du piège à NOx lorsque la masse de NOx stockée dans le piège à NOx est supérieure à une première valeur prédéterminée et des moyens de désactivation de la régénération du piège à NOx lorsque la masse de NOx stockée dans le piège à NOx est inférieure à une seconde valeur prédéterminée.

La présente invention sera mieux comprise à la lecture de la description qui va suivre, donnée uniquement à titre d'exemple et faite en relation avec les dessins annexés dans lesquels des références identiques concernent des éléments identiques ou analogues, et dans lesquels :

- la figure 1 est une vue schématique d'un système de supervision comprenant un dispositif de détermination de la masse de NOx stockée dans un piège à NOx selon l'invention, le système de supervision étant associé à un moteur Diesel de véhicule automobile ;
- la figure 2 est une vue schématique plus en détail des moyens de détermination de la masse de NOx stockée entrant dans la constitution du dispositif de la figure 1 ; et
- la figure 3 est un graphique illustrant la précision de la détermination mise en oeuvre par le dispositif de détermination de la masse de NOx stockée dans le piège à NOx selon l'invention.

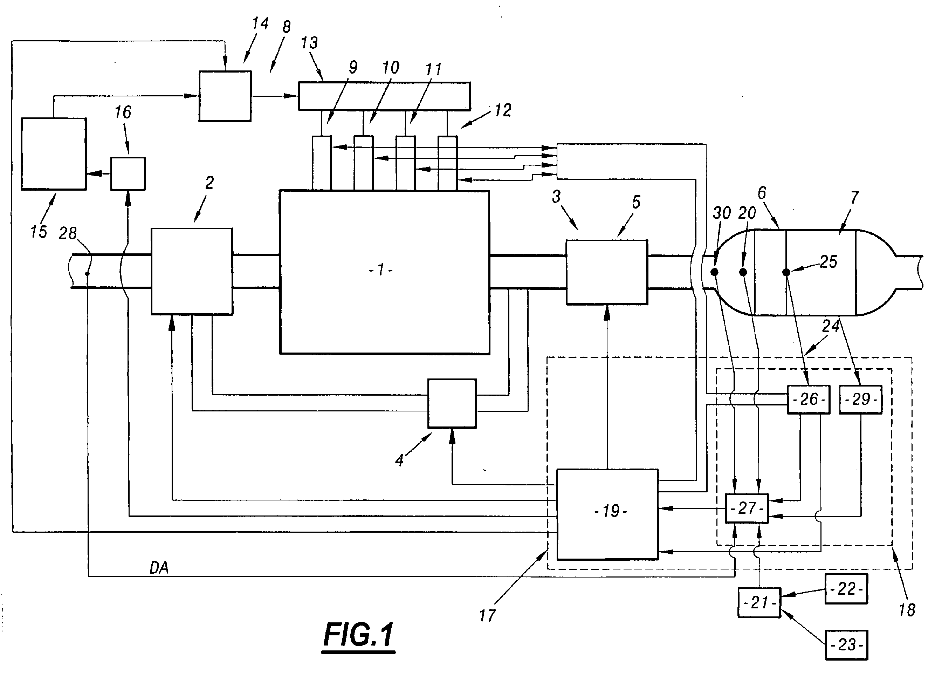

Sur la figure 1, on a illustré de manière schématique, sous la référence générale 1, un moteur de véhicule automobile, par exemple un moteur du type Diesel.

Le moteur 1 est associé à des moyens 2 d'admission de gaz en entrée de celui-ci et à une ligne d'échappement 3 des gaz d'échappement brûlés dans le moteur 1.

Des moyens 4 de recyclage des gaz d'échappement (EGR) sont également prévus et sont adaptés pour délivrer une partie des gaz d'échappement en sortie du moteur aux moyens 2 d'admission, ces moyens 2 d'admission recevant par ailleurs en entrée de l'air, et délivrant au moteur 1 un mélange air/gaz d'échappement, comme cela est connu en soi dans l'état de la technique.

La ligne d'échappement 3 peut également être associée à un turbo compresseur 5, et plus particulièrement la partie de turbine de celui-ci

Pour limiter l'émission de polluants, et notamment l'émission de NOx et/ou de particules de soufre dans l'atmosphère, la ligne d'échappement 3 comprend par exemple un catalyseur d'oxydation 6 et un piège à NOx 7 placé en aval du catalyseur 6.

Le catalyseur 6 est adapté pour générer des exothermes à l'entrée du piège à NOx 7 pour aider à sa régénération, par exemple en brûlant des hydrocarbures délivrés par le moteur 1, comme cela est connu en soi dans l'état de la technique.

Le moteur 1 est également associé à des moyens 8 d'alimentation en carburant des cylindres de celui-ci, dans cet exemple au nombre de quatre, au moyen d'injecteurs 9, 10, 11 et 12 à commande électronique par exemple.

Les moyens 8 d'alimentation peuvent également comprendre une rampe commune d'alimentation 13 raccordée aux injecteurs 9, 10, 11, 12 et à une pompe à haute pression 14 pour son approvisionnement en carburant à partir d'un réservoir 15 de carburant. Le réservoir 15 peut être associé à des moyens d'ajout au carburant d'un additif, stocké dans un réservoir auxiliaire 16 et destiné à se déposer sur le piège à NOx avec les particules auxquelles il est mélangé, pour abaisser la température de combustion des particules piégées dans celui-ci, et ainsi aider à sa régénération.

Le moteur 1 et les différents organes qui viennent d'être décrits sont associés à un système 17 de supervision du fonctionnement du piège à NOx 7. Le système 17 de supervision est adapté pour surveiller l'état de fonctionnement du piège à NOx, et particulièrement son état de saturation en NOx, et pour commander en conséquence différentes phases de fonctionnement du moteur.

A cet effet, le système 17 de supervision commande le fonctionnement des organes associés au moteur 1 en fonction d'informations acquises, comme par exemple la température du piège à NOx 7, la température du catalyseur 6, la quantité de carburant admise dans les cylindres, ou autres. Par exemple, le système 17 de supervision est adapté pour commander les caractéristiques des injections de carburant dans les cylindres après leur point mort haut, ou post-injection, afin d'alimenter le catalyseur 6 en hydrocarbures non brûlés, et ainsi générer un exotherme en entrée du piège à NOx 7 ou pour commander la richesse des gaz d'échappement, conditionnant ainsi la phase de régénération du piège à NOx 7.

De manière avantageuse, le système 17 de supervision comprend un dispositif 18 de détermination de la masse de NOx stockée dans le piège à NOx 7, et des moyens 19 de supervision qui comparent la masse de NOx stockée déterminée par le dispositif 18 à des valeurs prédéterminées pour commander les différentes phases de fonctionnement du piège à NOx 7.

Si la masse de NOx stockée déterminée par le dispositif 18 est supérieure à une première valeur prédéterminée, par exemple représentative d'un état proche de la saturation du piège à NOx, les moyens 19 de supervision activent la régénération du piège à NOx, par exemple en commandant les injecteurs 9, 10, 11, 12 pour qu'ils délivrent des post-injections importantes afin que le catalyseur 6 génère un exotherme en entrée du piège à NOx 7 et/ou pour que la richesse des gaz d'échappement augmente, comme cela est connu en soi dans l'état de la technique,

Si la masse de NOx stockée déterminée par le dispositif 18 est inférieure à une seconde valeur prédéterminée, par exemple proche de zéro, les moyens 19 de supervision désactivent alors la régénération du piège à NOx.

Le dispositif 18 de détermination de la masse de NOx stockée dans le piège à NOx 7, comprend des moyens 20 d'acquisition de la richesse Ri des gaz d'échappement en amont du piège, par exemple une sonde supérieure $\lambda$ proportionnelle agencée dans la ligne d'échappement 3 en amont du piège à NOx 7.

Le dispositif 18 de détermination comprend également des moyens d'acquisition du débit DNOx de NOx en amont du piège à NOx. De manière avantageuse, les moyens d'acquisition comprennent des moyens 21 de détermination du débit DNOx de NOx en amont du piège à NOx 7 en fonction d'une cartographie prédéterminée de débits de NOx évaluée pour les valeurs du régime et du couple moteur délivrées aux moyens 21 par des capteurs 22, 23 de régime et de couple moteur, respectivement.

Le dispositif 18 de détermination de la masse de NOx stockée dans le piège à NOx 7 comprend également des moyens 24 d'acquisition de la température T du piège à NOx 7. Les moyens 24 d'acquisition comprennent par exemple un capteur 25 de température agencé dans la ligne d'échappement 3 en amont du piège à NOx 7 et des moyens 26 de détermination de la température T du piège à NOx 7 en fonction de la température acquise en amont de celui-ci et de paramètres de fonctionnement des injecteurs 9, 10, 11, 12, reçus en entrée.

Bien entendu, la température T du piège à NOx peut également être acquise au moyen d'un capteur de température approprié agencé dans le piège lui-même.

Le dispositif 18 de détermination de la masse de NOx stockée dans le piège à NOx 7 comprend également des moyens 28 d'acquisition du débit d'air DA en entrée du moteur, par exemple un débit-mètre agencé en entrée des moyens 2 d'admission, des moyens 29 de détermination de l'état d'usure EU du piège à NOx, par exemple en fonction du kilométrage du véhicule, et des moyens 30 d'acquisition de la concentration [NOx] en NOx des gaz d'échappement en amont du piège, comprenant par exemple un capteur de NOx agencé en amont du piège à NOx 7 ou des moyens d'estimation de cette concentration à partir d'un modèle d'estimation de celle-ci en sortie du moteur.

Le dispositif 18 de détermination de la masse de NOx stockée dans le piège à NOx 7 comprend enfin des moyens 27 de détermination de la masse de NOx stockée dans le piège. Les moyens 27 reçoivent en entrée la richesse Ri des gaz d'échappement acquise, la température T du piège à NOx 7 acquise, et le débit DNOx de NOx acquis. Les moyens 27 de détermination sont adaptés pour déterminer, et délivrer aux moyens 19 de supervision, la masse de NOx stockée dans le piège à NOx 7 en fonction de ces entrées, comme cela sera expliqué plus en détail par la suite.

Le débit DA d'air acquis, l'état d'usure EU du piège à NOx 7 et la concentration [NOx] en NOx acquis sont également délivrés aux moyens 27 de détermination afin d'améliorer la précision de la détermination de la masse de NOx stockée en fonction de la température T, du débit DNOx et de la richesse Ri, comme cela sera expliqué plus en détail par la suite.

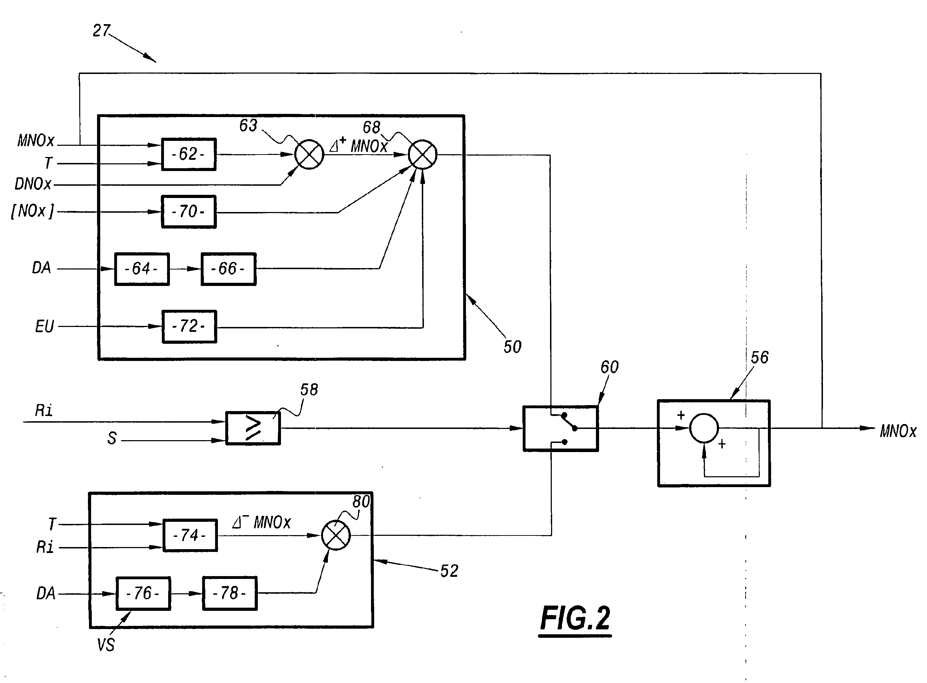

Il va maintenant être décrit plus en détail en relation avec la figure 2, l'agencement et le fonctionnement des moyens 27 de détermination de la masse de NOx stockée dans le piège à NOx 7.

Les moyens 27 de détermination comprennent des premiers moyens 50 de détermination adaptés pour déterminer l'accroissement $\Delta^+MNOx$ par unité de temps de la masse de NOx stockée dans le piège à NOx lorsque les gaz d'échappement sont pauvres.

Les moyens 27 de détermination comprennent également des seconds moyens 52 de détermination adaptés pour déterminer la réduction $\Delta^-MNOx$ par unité de temps de la masse de NOx stockée dans le piège à NOx lorsque les gaz d'échappement sont riches.

Par exemple, les premiers moyens 50 de détermination délivrent de manière continue une valeur en fonction de la masse MNOx de NOx déjà stockée dans le piège à NOx, de la température T acquise du piège à NOx et du débit DNOx de NOx acquis.

La masse MNOx de NOx déjà stockée dans le piège est mémorisée dans des moyens 56 de mémorisation et est délivrée en entrée des premiers moyens 50 de détermination.

La valeur délivrée par les premiers moyens 50 est alors égale à l'accroissement $\Delta^+MNOx$ par l'unité de temps de la masse de NOx stockée lorsque les gaz d'échappement sont pauvres.

D'une manière analogue, les seconds moyens 52 de détermination délivrent de manière continue une valeur en fonction de la température T acquise du piège à NOx et de la richesse RI des gaz d'échappement en amont de celui-ci. La valeur délivrée par les seconds moyens 52 est alors égale à la réduction $\Delta^-MNOx$ par unité de temps de la masse de NOx stockée dans le piège à NOx, lorsque les gaz d'échappements sont riches.

Les moyens 27 de détermination comprennent également des moyens 58 de comparaison adaptés pour comparer la richesse Ri acquise des gaz d'échappement à une valeur prédéterminée S pour déterminer si les gaz d'échappement en amont du piège à NOx sont riches ou pauvres. Si la richesse acquise des gaz d'échappement est supérieure ou égale à la valeur S, alors les gaz d'échappement sont déterminés comme étant riches, alors que si la richesse Ri acquise est inférieure à cette valeur S, les gaz d'échappement sont déterminés comme étant pauvres.

Le résultat de la comparaison réalisée par les moyens 58 de comparaison est alors délivré en tant que signal de commande à un commutateur piloté 60 qui reçoit en entrée la sortie des premiers moyens 50 de détermination et la sortie des seconds moyens 52 de détermination.

Lorsque les gaz d'échappement sont déterminés comme riches par les moyens 58 de comparaison, le commutateur piloté sélectionne alors la sortie des premiers moyens 50 de détermination, et la sortie des seconds moyens 52 de détermination dans le cas contraire, c'est-à-dire si les gaz sont déterminés comme pauvres.

La sortie du commutateur piloté 60 est alors délivrée aux moyens 56 de mémorisation de la masse de NOx stockée dans le piège à NOx pour la mise à jour de la masse MNOx de NOx déjà stockée dans le piège à NOx.

Les premiers moyens 50 de détermination de l'accroissement $\Delta^+MNOx$ comprennent plus particulièrement des moyens 62 formant cartographie. Les moyens 62 formant cartographie sont adaptés pour déterminer l'efficacité de stockage des NOx par le piège à NOx en évaluant, pour la masse MNOx mémorisée dans les moyens 56 de mémorisation et la température T acquise du piège à NOx, une cartographie prédéterminée d'efficacités de stockage.

Cette cartographie prédéterminée d'efficacités de stockage a été déterminée lors d'une étude antérieure, et est par exemple codée sous la forme d'une table de correspondance mémorisée dans les moyens 62 formant cartographie.

L'efficacité de stockage $\eta_{NOx}$ est définie comme étant le ratio entre la masse de NOx stockée par unité de temps par le piège et la masse de NOx entrant par unité de temps dans le piège, c'est-à-dire le débit DNOx de NOx en amont du piège à NOX. Cette efficacité peut donc être déterminée selon la relation :

$$\eta_{NOx}\ (\%) = \frac{DNOx_{entrant} - DNOx_{sortant}}{DNOx_{entrant}}$$

où $DNOx_{entrant}$ est la masse de NOx entrant dans le piège par unité de temps, et $DNOx_{sortant}$ est la masse de NOx sortant du piège par unité de temps, ces deux masses par unité de temps étant par exemple exprimées en gramme par seconde.

Ainsi, en connaissant la valeur de l'efficacité de stockage $\eta_{NOx}$ du piège à NOx, il est possible de déterminer l'accroissement $\Delta^+MNOx$ par unité de temps de la masse stockée dans le piège à NOx en multipliant celle-ci par le débit DNOx de NOx acquis.

La sortie des moyens 62 formant cartographie est donc multipliée par le débit DNOx acquis par des moyens 63 de multiplication.

Lors d'une étude antérieure, il a été mis en évidence que l'efficacité de stockage $\eta_{NOx}$ dépend également du rapport WH entre le débit d'air DA en entrée du moteur et le volume de stockage du piège à NOx, de la concentration [NOx] de NOx dans les gaz d'échappement en amont du piège à NOx, et de l'état d'usure EU du piège à NOx.

Afin de prendre en compte ces dépendances et ainsi déterminer de manière plus robuste et fiable la masse de NOx stockée dans le piège à NOx, les premiers moyens 50 de détermination comprennent des moyens 64 de calcul du rapport WH entre le débit d'air DA acquis en entrée du moteur et le volume de stockage du piège à NOx. Les moyens 64 de calcul délivrent ce rapport WH calculé à des moyens 66 de correction de l'accroissement $\Delta^+MNOx$ par unité de temps déterminé.

Les moyens 66 de correction comprennent par exemple des moyens formant cartographie adaptés pour déterminer un paramètre correctif en évaluant une cartographie prédéterminée pour le rapport WH calculé. Le paramètre correctif est ensuite délivré à des moyens 68 de multiplication. Les moyens 68 de multiplication reçoivent en entrée l'accroissement $\Delta^+MNOx$ déterminé et délivrent en sortie la multiplication de leurs entrées.

Les premiers moyens 50 de détermination comprennent également des moyens 70 de correction de l'accroissement $\Delta^+MNOx$ par unité de temps déterminé en fonction de la concentration [NOx] des NOx acquise. Les moyens 70 de correction comprennent par exemple des moyens formant cartographie adaptés pour déterminer un paramètre de correction en évaluant une cartographie prédéterminée pour la concentration [NOx] des NOx acquise et délivrer ce paramètre correctif aux moyens 68 de multiplication pour corriger la l'accroissement $\Delta^+MNOx$ déterminé.

Enfin, les premiers moyens 50 de détermination comprennent également des moyens 72 de correction de l'accroissement $\Delta^+MNOx$ déterminé en fonction de l'état d'usure EU du piège à NOx déterminé. Les moyens 72 de correction comprennent par exemple des moyens formant cartographie adaptés pour déterminer un paramètre correctif en évaluant une cartographie prédéterminée pour l'état d'usure EU du piège à NOx déterminé et pour délivrer ce paramètre correctif aux moyens 68 de multiplication pour corriger l'accroissement $\Delta^+MNOx$ déterminé.

Afin de déterminer la réduction $\Delta^-MNOx$ par unité de temps de la masse de NOx stockée dans le piège à NOx, les seconds moyens 52 de détermination comprennent des moyens 74 formant cartographie. Ces moyens 72 formant cartographie sont adaptés pour déterminer la réduction $\Delta^-MNOx$, en évaluant, pour la richesse Ri acquise des gaz d'échappement et la température T acquise du piège à NOx, une cartographie prédéterminée de réduction par unité de temps mémorisée dans les moyens 74. Cette cartographie a été déterminée lors de l'étude antérieure et est par exemple codée sous la forme d'une table de correspondance.

Par ailleurs, il a aussi été mis en évidence lors de l'étude antérieure que la réduction $\Delta^-MNOx$ par unité de temps de la masse de NOx stockée dans un piège à NOx dépend également du rapport WH entre le débit d'air DA en entrée du moteur et le volume de stockage du piège à NOx.

Ainsi, les seconds moyens 52 de détermination comprennent en outre des moyens 76 de calcul de ce rapport WH en fonction du débit d'air DA acquis en entrée du moteur et du volume de stockage du piège à NOx. Le rapport WH calculé est délivré à des moyens 78 de correction. Les moyens 78 de correction qui comprennent par exemple des moyens formant cartographie adaptés pour déterminer un paramètre correctif en évaluant une cartographie prédéterminée pour le rapport WH calculé et pour délivrer ce paramètre correctif à des moyens 80 de multiplication de celui-ci par la réduction $\Delta^-MNOx$ déterminée afin d'obtenir une réduction corrigée de la masse de NOx stockée dans le piège.

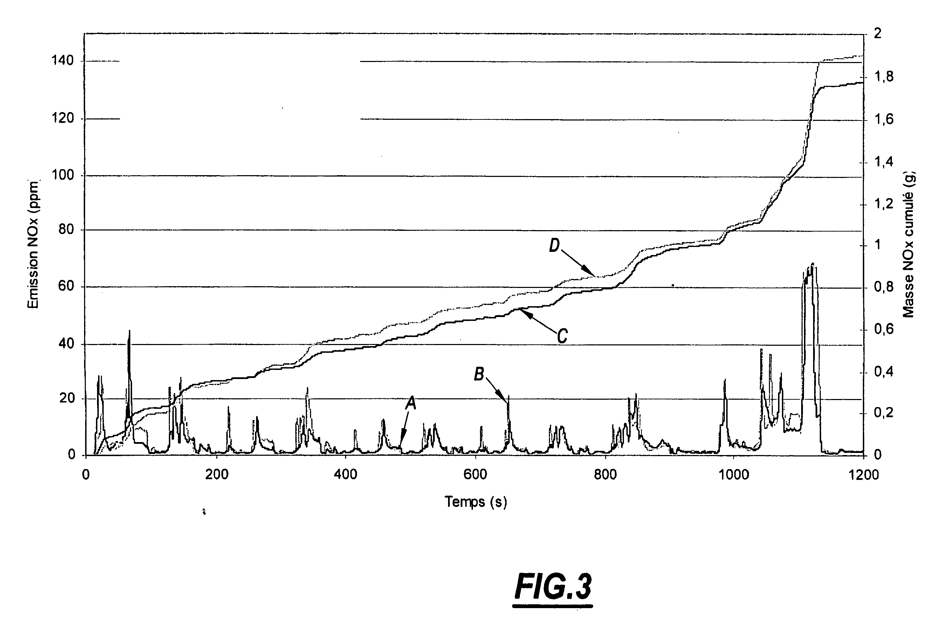

La figure 3 est un graphique illustrant la précision de la détermination de la masse de NOx stockée dans un piège à NOx d'un moteur de test, mise en oeuvre par le dispositif de détermination selon l'invention.

Le graphique de la figure 3 illustre l'émission de NOx en sortie du piège telle que mesurée (courbe A) et telle que déterminée par le dispositif selon l'invention (courbe B), ainsi que la masse de NOx stockée dans le piège telle que mesurée (courbe C) et telle que déterminée par le dispositif selon l'invention (courbe D).

L'écart relatif entre la masse stockée de NOx dans le piège mesurée et la masse stockée de NOx dans le piège déterminée par le dispositif selon l'invention est d'environ 6,5%. Il est ainsi possible de déterminer la masse de NOx stockée dans le piège de manière fiable et robuste en mettant en oeuvre un nombre de calculs limité.

Bien entendu, on comprendra que la définition des termes « accroissement par unité de temps » et « réduction par unité de temps » dépend de la mise en oeuvre du dispositif de détermination de la masse de NOx stockée dans le piège à NOx. Par exemple, l'unité de temps peut être égale à une période d'échantillonnage des informations en entrée du dispositif de détermination de la masse stockée.

Selon une variante, l'unité de temps peut tendre vers 0, auquel cas l'accroissement et la réduction sont des valeurs instantanées et le dispositif comprend alors des moyens d'intégration, par exemple analogique, afin de déterminer la masse de NOX stockée dans le piège à NOx.

Bien entendu d'autres modes de réalisation sont possibles.

**Revendications**

1. Dispositif (18) de détermination de la masse de NOx stockée dans un piège à NOx (7) agencé dans une ligne d'échappement (3) d'un moteur (1) de véhicule automobile, le dispositif comprenant des moyens (20, 21, 24) d'acquisition de la richesse des gaz d'échappement et de la température du piège à NOx des moyens (58) de comparaison de la richesse des gaz d'échappement en amont du piège à NOx à une valeur prédéterminée pour déterminer si les gaz d'échappement en amont du piège à NOx sont riches ou pauvres et des moyens (50, 52) de détermination de la masse de NOx stockée dans le piège à NOx en fonction de la température du piège à NOx et de la richesse des gaz d'échappement, **caractérisé en ce qu'**il comprend des moyens (21) d'acquisition du débit de NOx en amont du piège à NOx et **en ce que** les moyens (50, 52) de détermination de la masse de NOx stockée dans le Piège à NOx comprennent:

   - des premiers moyens (50) de détermination adaptés pour déterminer, lorsque les gaz d'échappement sont pauvres, l'accroissement par unité de temps de la masse de NOx stockée dans le piège à NOx en fonction de la masse de NOx déjà stockée dans le piège à NOx, de la température du piège à NOx, et du débit de NOx, en amont du piège à NOx ; et
   - des seconds moyens (52) de détermination adaptés pour déterminer, lorsque les gaz d'échappement sont riches, la réduction par unité de temps de la masse de NOx stockée dans le piège à NOx en fonction de la température du piège à NOx et de la richesse des gaz d'échappement en amont du piège à NOx.

2. Dispositif selon la revendication 1, **caractérisé en ce que** les premiers moyens (50) de détermination de l'accroissement par unité de temps de la masse de NOx stockée comprennent :

   - des moyens (62) formant cartographie adaptés pour déterminer l'efficacité de stockage des NOx du piège à NOx en évaluant, pour la masse de NOx déjà stockée et la température du piège à NOx, une cartographie prédéterminée d'efficacités de stockage ; et
   - des moyens (63) de multiplication du débit de NOx acquis par l'efficacité de stockage du piège à NOx déterminée, pour déterminer l'accroissement par unité de temps de la masse de NOx stockée dans le piège à NOx.

3. Dispositif selon la revendication 1 ou 2, **caractérisé en ce qu'**il comprend des moyens (28) d'acquisition du débit d'air en entrée du moteur et des moyens (64) de calcul du rapport entre le débit d'air en entrée du moteur et le volume de stockage du piège à NOx, et **en ce que** les premiers (50) moyens de détermination de l'accroissement par unité de temps de la masse de NOx stockée comprennent en outre des moyens (66) de correction de l'accroissement par unité de temps déterminé en fonction de ce rapport.

4. Dispositif selon l'une quelconque des revendications précédentes, **caractérisé en ce qu'**il comprend des moyens (30) d'acquisition de la concentration de NOx dans les gaz d'échappement en amont du piège à NOx et **en ce que** les premiers moyens (50) de détermination de l'accroissement par unité de temps de la masse de NOx stockée comprennent en outre des moyens (70) de correction de l'accroissement par unité de temps déterminé en fonction de cette concentration.

5. Dispositif selon l'une quelconque des revendications précédentes, **caractérisé en ce qu'**il comprend des moyens (29) d'acquisition de l'état d'usure du piège à NOx, et **en ce que** les premiers moyens (50) de détermination de l'accroissement par unité de temps de la masse de NOx stockée comprennent en outre des moyens (72) de correction de l'accroissement par unité de temps déterminé en fonction de cet état d'usure.

6. Dispositif selon l'une quelconque des revendications précédentes, **caractérisé en ce que** les seconds (52) moyens de détermination de la réduction par unité de temps de la masse de NOx stockée comprennent des moyens (74) formant cartographie adaptés pour déterminer la réduction par unité de temps de la masse de NOx en évaluant, pour la richesse acquise des gaz d'échappement en amont du piège à NOx et la température acquise du piège à NOx, une cartographie prédéterminée de réduction par unité de temps.

7. Dispositif selon l'une quelconque des revendications précédentes, **caractérisé en ce qu'**il comprend en outre des moyens (28) d'acquisition du débit d'air en entrée du moteur et des moyens (76) de calcul du rapport entre le débit d'air en entrée du moteur et le volume de stockage du piège à NOx, et **en ce que** les seconds moyens (52) de la réduction par unité de temps de la masse de NOx stockée comprennent en outre des moyens (78) de correction de la réduction par unité de temps déterminée en fonction de ce rapport.

8. Système de supervision (17) de la régénération d'un piège à NOx agencé dans une ligne d'échappement d'un moteur de véhicule automobile, **caractérisé en ce qu'**il comprend un dispositif (18) de détermination de la masse de NOx stockée dans le piège à NOx conforme à l'une quelconque des revendications précédentes, et **en ce qu'**il comporte des moyens (19) d'activation de la régénération du piège à NOx lorsque la masse de NOx stockée dans le piège à NOx est supérieure à une première valeur prédéterminée et des moyens (19) de désactivation de la régénération du piège à NOx lorsque la masse de NOx stockée dans le piège à NOx est inférieure à une seconde valeur prédéterminée.

**Claims**

1. Device (18) for determining the mass of NOx stored in an NOx trap (7) fitted in an exhaust line (3) of a motor vehicle engine (1), the device comprising means (20, 21, 24) of acquiring the richness of the exhaust gases and the temperature of the NOx trap, means (58) of comparing the richness of the exhaust gases upstream of the NOx trap with a predetermined value in order to determine whether the exhaust gases upstream of the NOx trap are rich or lean and means (50, 52) of determining the mass of NOx stored in the NOx trap according to the temperature of the NOx trap and the richness of the exhaust gases, **characterised in that** it comprises means (21) of acquiring the NOx flow rate upstream of the NOx trap, and **in that** the means (50, 52) of determining the mass of NOx stored in the NOx trap comprise:

   - first determination means (50) adapted to determine, when the exhaust gases are lean, the increase per unit time in the mass of NOx stored in the NOx trap according to the mass of NOx already stored in the NOx trap, the temperature of the NOx trap, and the NOx flow rate upstream of the NOx trap; and
   - second determination means (52) adapted to determine, when the exhaust gases are rich, the reduction per unit time in the mass of NOx stored in the NOx trap according to the temperature of the NOx trap and the richness of the exhaust gases upstream of the NOx trap.

2. Device according to Claim 1, **characterised in that** the first means (50) of determining the increase per unit time in the mass of NOx stored comprise:

   - mapping-forming means (62) adapted to determine the NOx storage efficiency of the NOx trap by evaluating, for the mass of NOx already stored and the temperature of the NOx trap, a predetermined storage efficiency mapping; and
   - means (63) of multiplying the acquired NOx flow rate by the determined storage efficiency of the NOx trap, in order to determine the increase per unit time in the mass of NOx stored in the NOx trap.

3. Device according to Claim 1 or 2, **characterised in that** it comprises means (28) of acquiring the air flow rate at the input of the engine and means (64) of calculating the ratio between the air flow rate at the input of the engine and the storage volume of the NOx trap, and **in that** the first means (50) of determining the increase per unit time in the mass of NOx stored furthermore comprise means (66) of correcting the determined increase per unit time according to this ratio.

4. Device according to any one of the preceding claims, **characterised in that** it comprises means (30) of acquiring the concentration of NOx in the exhaust gases upstream of the NOx trap, and **in that** the first means (50) of determining the increase per unit time in the mass of NOx stored furthermore comprise means (70) of correcting the determined increase per unit time according to this concentration.

5. Device according to any one of the preceding claims, **characterised in that** it comprises means (29) of acquiring the state of wear of the NOx trap, and **in that** the first means (50) of determining the increase per unit time in the mass of NOx stored furthermore comprise means (72) of correcting the determined increase per unit time according to this state of wear.

6. Device according to any one of the preceding claims, **characterised in that** the second means (52) of determining the reduction per unit time in the mass of NOx stored comprise mapping-forming means (74) adapted to determine the reduction per unit time in the mass of NOx by evaluating, for the acquired richness of the exhaust gases upstream of the NOx trap and the acquired temperature of the NOx trap, a predetermined mapping of reduction per unit time.

7. Device according to any one of the preceding claims, **characterised in that** it furthermore comprises means (28) of acquiring the air flow rate at the input of the engine and means (76) of calculating the ratio between the air flow rate at the input of the engine and the storage volume of the NOx trap, and **in that** the second means (52) of reduction per unit time in the mass of NOx stored furthermore comprise means (78) of correcting the determined reduction per unit time according to this ratio.

8. System (17) for supervising the regeneration of an NOx trap fitted in an exhaust line of a motor vehicle engine, **characterised in that** it comprises a device (18) for determining the mass of NOx stored in the NOx trap in accordance with any one of the preceding claims, and **in that** it comprises means (19) of activating the regeneration of the NOx trap when the mass of NOx stored in the NOx trap is greater than a first predetermined value and means (19) of deactivating the regeneration of the NOx trap when the mass of NOx stored in the NOx trap is less than a second predetermined value.

**Patentansprüche**

1. Vorrichtung (18) zur Bestimmung der in einem NOx-Speicher (7) gelagerten NOx-Masse, angebracht in einer Abgasleitung (3) des Kraftfahrzeugmotors (1), wobei die Vorrichtung die Mittel (20, 21, 24) zur Bestimmung der Reichheit der Abgase und der Temperatur des NOx-Speichers, die Mittel (58) zum Vergleich der Reichheit der Abgase vorne am NOx-Speicher mit einem vorbestimmten Wert, um zu bestimmen, ob die Abgase vorne am NOx-Speicher reich oder arm sind, und die Mittel (50, 52) zur Bestimmung der im NOx-Speicher gelagerten NOx-Masse entsprechend der Temperatur des NOx-Speichers und der Reichheit der Abgase umfasst, **dadurch gekennzeichnet, dass** sie die Mittel (21) zur Bestimmung der NOx-Durchflussmenge vorne am NOx-Speicher umfasst und dass die Mittel (50, 52) der Bestimmung der im NOx-Speicher gelagerten NOx-Masse umfassen:

   - die ersten Bestimmungsmittel (50), die geeignet sind, bei armen Abgasen die Zunahme der im NOx-Speicher gelagerten NOx-Masse pro Zeiteinheit entsprechend der bereits im NOx-Speicher gelagerten NOx-Masse, der Temperatur des NOx-Speichers und der NOx-Durchflussmenge vorne am NOx-Speicher zu bestimmen; und
   - die zweiten Bestimmungsmittel (52), die geeignet sind, bei reichen Abgasen die Reduzierung der im NOx-Speicher gelagerten NOx-Masse pro Zeiteinheit entsprechend der Temperatur des NOx-Speichers und der Reichheit der Abgase vorne am NOx-Speicher zu bestimmen.

2. Vorrichtung nach Anspruch 1, **dadurch gekennzeichnet, dass** die ersten Mittel (50) zur Bestimmung der Zunahme der gelagerten NOx-Masse pro Zeiteinheit umfassen:

   - die Mittel (62) zur Erstellung einer Kartographie, die geeignet sind, die NOx-Lagerungs-Effizienz des NOx-Speichers zu bestimmen bei Bewertung einer vorbestimmten Kartographie der Lagerungseffizienz für die bereits gelagerte NOx-Masse und der Temperatur des NOx-Speichers; und
   - die Multiplikationsmittel (63) mithilfe der durch die bestimmte Lagerungseffizienz des NOx-Speichers erreichten NOx-Durchflussmenge, um die Zunahme der im NOx-Speicher gelagerten NOx-Masse pro Zeiteinheit zu bestimmen.

3. Vorrichtung nach einem der Ansprüche 1 oder 2, **dadurch gekennzeichnet, dass** die Vorrichtung die Mittel (28) zur Erfassung der Luftdurchflussmenge am Motoreinlass und die Mittel (64) zur Berechnung des Verhältnisses zwischen der Luftdurchflussmenge am Motoreinlass und dem Lagerungsvolumen des NOx-Speichers umfasst und dass die ersten Mittel (50) zur Bestimmung der Zunahme der gelagerten NOx-Masse pro Zeiteinheit außerdem die Mittel (66) zur Korrektur der Zunahme pro bestimmter Zeiteinheit entsprechend dieses Verhältnisses umfassen.

4. Vorrichtung nach einem der vorhergehenden, **dadurch gekennzeichnet, dass** die Vorrichtung die Mittel (30) zur Erfassung der NOx-Konzentration in den Abgasen vorne am NOx-Speicher umfasst und dass die ersten Mittel (50) zur Bestimmung der Zunahme der gelagerten NOx-Masse pro Zeiteinheit unter anderem auch die Mittel (70) zur Korrektur der Zunahme pro bestimmter Zeiteinheit entsprechend dieser Konzentration umfassen.

5. Vorrichtung nach einem der vorhergehenden, **dadurch gekennzeichnet, dass** die Vorrichtung die Mittel (29) zur Erfassung des Abnutzungszustandes des NOx-Speichers umfasst und dass die ersten Mittel (50) zur Bestimmung der Zunahme der gelagerten NOx-Masse pro Zeiteinheit außerdem die Mittel (72) zur Korrektur der Zunahme pro bestimmter Zeiteinheit entsprechend des Abnutzungszustandes umfassen.

6. Vorrichtung nach einem der vorhergehenden, **dadurch gekennzeichnet, dass** die zweiten Mittel (52) zur Bestimmung der Reduzierung der gelagerten NOx-Masse pro Zeiteinheit die Mittel (74) zur Erstellung einer Kartographie umfassen, die geeignet sind, die Reduzierung der NOx-Masse pro Zeiteinheit bei Bewertung einer vorbestimmten Kartographie der Reduzierung pro Zeiteinheit für die erfasste Reichheit der Abgase vorne am NOx-Speicher und der erfassten Temperatur des NOx-Speichers zu bestimmen.

**7.** Vorrichtung nach einem der vorhergehenden, **dadurch gekennzeichnet, dass** die Vorrichtung unter anderem die Mittel (28) zur Erfassung der Luftdurchflussmenge am Motoreinlass und die Mittel (76) der Berechnung des Verhältnisses zwischen der Luftdurchflussmenge am Motoreinlass und des Lagerungsvolumens des NOx-Speichers umfasst und dass die zweiten Mittel (52) der Reduzierung gelagerten NOx-Masse pro Zeiteinheit unter anderem die Mittel (78) zur Korrektur der Reduzierung pro bestimmter Zeiteinheit entsprechend dieses Verhältnisses umfassen.

**8.** Überwachungssystem (17) zur Regenerierung des NOx-Speichers, angebracht in einer Abgasleitung eines Kraftfahrzeugmotors, **dadurch gekennzeichnet, dass** das System eine Vorrichtung (18) zur Bestimmung der im NOx-Speicher gelagerten NOx-Masse nach einem der vorhergehenden Ansprüche umfasst, und dass die Vorrichtung umfasst die Mittel (19) zur Aktivierung der Regenerierung des NOx-Speichers, wenn die im NOx-Speicher gelagerte NOx-Masse oberhalb eines vorbestimmten ersten Wertes liegt, und die Mittel (19) der Deaktivierung der NOx-Speicher-Regenerierung, wenn die im NOx-Speicher gelagerte NOx-Masse unterhalb eines vorbestimmten zweiten Wertes liegt.

*FIG.1*

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19607151 C1